Europäisches Patentamt

European Patent Office

Office européen des brevets

(11) Publication number: **0 059 084**
**B1**

(12) **EUROPEAN PATENT SPECIFICATION**

(45) Date of publication of patent specification: **10.04.85**

(51) Int. Cl.⁴: **G 02 B 27/28, G 02 B 27/10, G 11 B 7/00**

(21) Application number: **82300854.5**

(22) Date of filing: **19.02.82**

(54) Optical reader apparatus.

(30) Priority: **23.02.81 US 237167**

(43) Date of publication of application:
**01.09.82 Bulletin 82/35**

(45) Publication of the grant of the patent:
**10.04.85 Bulletin 85/15**

(84) Designated Contracting States:
**DE FR GB NL**

(56) References cited:
**EP-A-0 019 378**
**GB-A-1 165 553**
**US-A-4 199 226**

**Patent Abstracts of Japan Vol. 3, No. 9, 26
January 1979 page 14E86**

(73) Proprietor: **XEROX CORPORATION
Xerox Square - 020
Rochester New York 14644 (US)**

(72) Inventor: **Kramer, Charles J.
84 Deer Creek Road
Pittsford New York 14534 (US)**

(74) Representative: **Goode, Ian Roy et al
European Patent Attorney c/o Rank Xerox
Limited Patent Department Rank Xerox House
338 Euston Road
London NW1 3BH (GB)**

Courier Press, Leamington Spa, England.

## Description

This invention relates to an optical reader apparatus for reading the information content of a recording surface, including a laser source which generates an S polarized beam of wavelength λ, a polarizing beamsplitter device, a wave retardation device placed in the optical path so as to convert the linearly polarized diffracted beam into a circularly polarized beam, and a lens element placed in the optical path between said retardation device and the recording surface so as to focus said beam onto the appropriate surface area of the recording surface, whereby said beam is reflected from said recording surface through said lens and through said retardation device, thereby being converted into a P polarized wave which is essentially completely transmitted through said beamsplitter onto a detector device. Such an apparatus is described in the September 1978 RCA Review, (Vol. 39, No. 3) at page 395.

Polarizing beamsplitters are known in the art, e.g. typical transmittance and reflectance characteristics are disclosed in pages 157, 158 of "Handbook of Lasers" edited by Robert J. Pressley, Chemical Rubber Company. In general, it is desired that a polarizing beamsplitter provide a high transmittance for the P component of a laser input beam and a high reflectance for the S component. One type of prior art beamsplitter that has been so employed is a cube consisting of two prisms having their diagonal surface joined together. The cube beamsplitter disclosed in US—A 3,704,934 is representative of such devices. Beamsplitters are also extensively used in optical readout of the information contained on video discs. These prior art beamsplitters are typically of calcite or glass construction resulting in the disadvantage that they form a relatively massive component compared with other components in a laser system. A further disadvantage is the relatively high cost of such materials.

In GB—A—1165553 there is described an apparatus for combining radiations in which a grating arrangement acts as a polarizing beamsplitter for each of the two incident beams which are being combined.

The present invention is intended to overcome these disadvantages of an apparatus using a cube beamsplitter, and to provide an optical reader apparatus which includes a low cost, low mass beamsplitter. The optical reader apparatus of the invention is characterised in that the beamsplitter is formed as a surface relief transmission grating having a grating period d equal to said wavelength λ divided by a value of between 1.2 and 1.5, said grating essentially completely diffracting incident S polarized light and transmitting P polarized light, said grating being placed in the optical path of said coherent radiation so that said radiation is incident at an angle $\theta_i$ and diffracted at a substantially equally angle $\theta_d$, where $\theta_i = \theta_d = 45°$.

The beamsplitter, in a preferred mode, has a high diffraction efficiency for S component light and high transmittance for P component light and finds an exemplary use in a laser video disc read/write system as described below. The beamsplitter can be formed as a surface relief transmission grating of the type disclosed in Applicant's co-pending European Patent Application No. 80301651.8 (Publication No. 0020076). While the grating described in said co-pending application was used as a holographic scanning element, its use in combination with optical readout elements disclosed herein represents a novel and useful application of the unique grating properties.

A beamsplitter device in accordance with the invention will now be described, by way of example, with reference to the accompanying drawings, in which:—

Figure 1 is a graph plotting grating diffraction efficiency of a beamsplitter as a function of incident light polarization and λ/d ratio.

Figure 2 is a schematic of a video disc laser system utilizing the beamsplitter of the present invention.

Figure 3 is a schematic of a video disc system using a diode laser and a pair of beamsplitters to provide compensation for wavelength shifts.

Figure 4 shows a second embodiment of a video disc laser system.

Figure 5 is a schematic of a system utilizing a beamsplitter of the present invention to combine the output of two lasers.

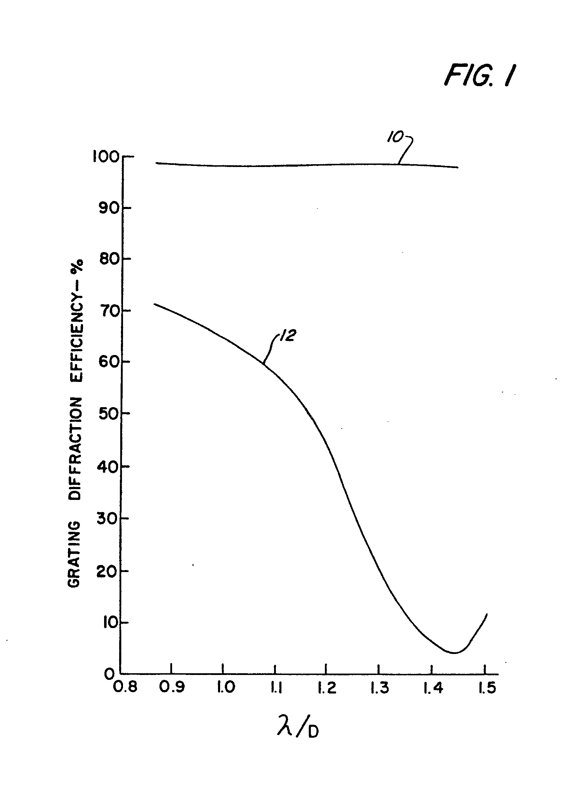

As disclosed in said co-pending application, a plane linear diffraction grating is constructed so as to provide a scanning beam trace of an input laser beam. This scan system was realized by forming the grating with a grating spacing d which had a relation to the input laser beam wavelength λ of λ/d=1 to 1.6 and by making the input and diffraction angle approximately 45°. The effect of such a grating on the incident light polarization was hinted at in Figure 12 of that application. Figure 1 of the present application shows the results of more precise measurements and data. Referring to Figure 1, plots 10 and 12 represent the diffraction efficiency as a function of λ/d for both S and P light polarization components, respectively.

As shown, the S component is almost completely diffracted at any λ/d value while the P component is increasingly transmitted with increasing λ/d values reaching an almost total transmission value at a λ/d value of approximately 1.414. The properties of this type of grating lend themselves extremely well to an exemplary use as a beamsplitter in a laser system which reads or writes the information content of a video disc.

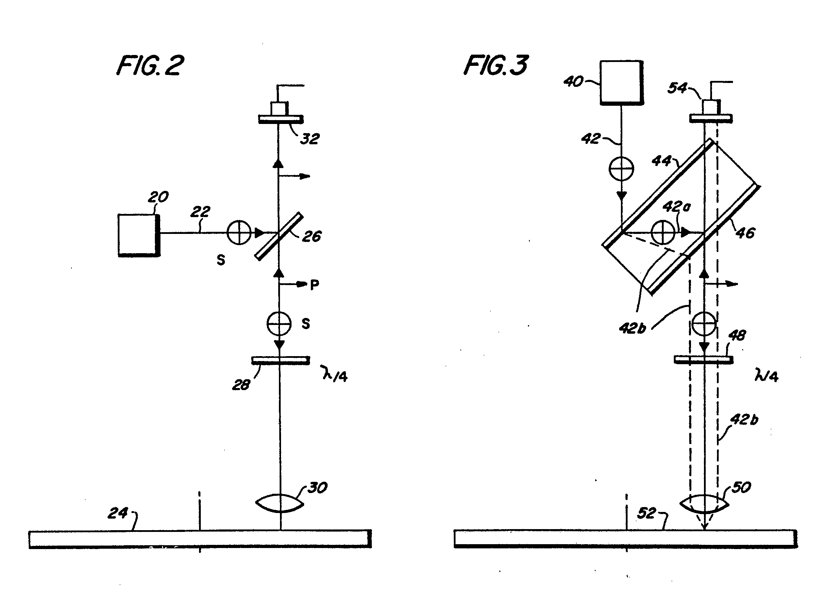

Referring now to Figure 2, there is shown a laser source 20 which produces a beam 22 having a wavelength λ, which is used to read or write upon video disc 24. Polarizing beamsplitter 26 is a surface relief transmission grating formed either by known holographic or ruling techniques and having a grating period defined by the expression

$\lambda/d=1.414$. Input beam 22, consisting of an S polarized light with its electric field perpendicular to the plane of incidence, is incident on the grating at an angle of 45° and, from Figure 1, the S component will be diffracted out at an angle of 45°, i.e. 90° to the incoming beam, while the P component, with its electric field in the plane of incidence, is almost entirely transmitted through the beamsplitter. The diffracted S component beam passes through a $\lambda/4$ retardation plate 28 thereby converting the input linear polarization to circular polarization. The beam is then focused by lens 30 onto the surface of disc 24. If in the write mode, the laser source would be operated at the energy levels required to form the information-bearing apertures, or valleys in the disc. If in the read mode, the laser beam will read the information previously formed on the disc. Appropriate tracking means known in the art can be employed to move components 26, 28 and 30 in a tracking mode.

If the system is operated in the read mode, the beam is reflected upwards through lens 30 and passes again through plate 28 undergoing conversion from circular to linearly P polarized light. The P polarized beam is incident on beamsplitter 26 at 45° and, therefore, is transmitted at almost 100% efficiency through the beamsplitter and onto detector 32. Detector 32 then produces an output signal that is sent to appropriate read circuitry.

It is thus apparent that the polarizing beamsplitter of the present invention has enabled a very attractive system for optical disc storage and readout. The diffraction and transmission characteristics of the beamsplitter have been effectively utilized so as to, in effect, do the work of two separate components in the optical path. The beamsplitter is lightweight and simplifies the tracking function; it lends itself to replication techniques and hence is relatively inexpensive to manufacture. Its efficiency is as good as, or better than, the known corner cubes or plates.

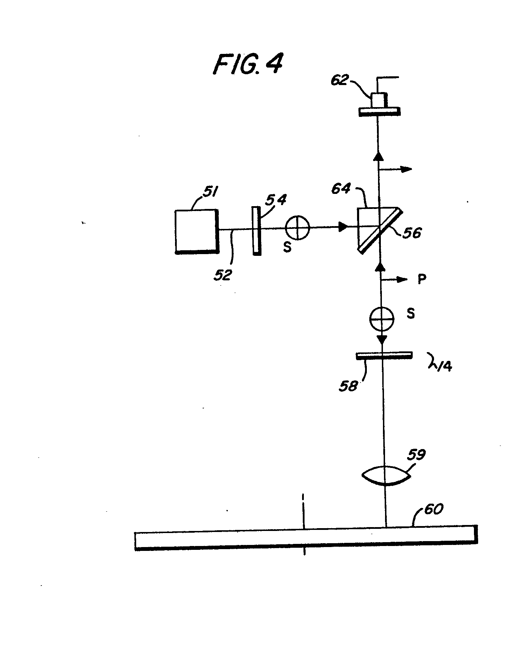

The beamsplitter can be used most advantageously with gas laser sources such as He—Ne because of the well defined wavelength of such sources. Diode lasers, because of their wavelength spread and temperature dependent shift during warm-up may result in undesirable tracking errors for some systems. A correcting mechanism for such systems is shown in Figure 3. Referring to the figure, laser source 40, for illustrative purposes is assumed to be a Hitachi Series 1000 diode laser having a wavelength of 0.82 μm. S polarized beam 42 is incident on a first plane grating beamsplitter 44 at an angle of 45°.

The grating period for this configuration can then be determined by solving for 1.414 d=0.82 μm or d=.05798 μm. A second beamsplitter 46 with identical properties, i.e. formed by the same forming process, is placed parallel to beamsplitter 44. S polarized beam 42 has its S component beam diffracted out of splitter 44 along path 42a at an angle of 45° while the P component is transmitted therethrough. Upon incidence at grating 46, the polarized beam is again diffracted at 45° emerging in an optical exit path which is parallel with the entrance path of beam 42. The diffracted S component beam passes through a $\lambda/4$ retardation plate 48 thereby converting the input linear polarization to circular polarization. The beam is then focused by lens 50 onto the surface of a disc 52. In the read mode, the beam is reflected through lens 50 and passes again through plate 48 undergoing conversion from circular to linearly P polarized light. The P polarized beam is incident on beamsplitter 46 at 45° and therefore is transmitted therethrough, past the shortened edge of splitter 44 and onto detector 54.

During laser warm-up conditions, however, it is assumed that a wavelength shift of 1 nm has occurred. For this condition, beam 42 is diffracted by splitter 44 along a slightly different path, represented by dotted line 42b (shown at an exaggerated deviation angle for illustrative purposes). Because of the identical construction and parallel placement of beamsplitters 44 and 46, the error beam after being diffracted by splitter 46, will emerge parallel with input beam 42 and therefore parallel to the beam following the normal path. The diffracted S polarized beam is again circularly polarized by plate 48. Focusing lens 50 has the property of focusing all parallel rays entering it to the same focal point so beam 42 is focused onto the desired segment of the disc 52. The reflected beam in the read mode is projected back through the components in the same manner as described above.

To summarize the above system, given two plane gratings fabricated so as to satisfy the optimum formulation

$$\frac{d}{\lambda\ \text{source}}=1.414,$$

and placed in a parallel relationship, a beam of light incident at an angle of 45° to the first of the pair will, of necessity, exit the second parallel to the direction of the entrance beam. This characteristic is, therefore, utilized to compensate for the effects of wavelength shift, or spread, in the source which would otherwise cause errors in the diffraction path. Since any diffracted rays within the small limits of wavelength shift which are normally experienced will all travel parallel paths from splitter 46 to the lens, all rays will be focused to the same desired writing or reading zone on the disc.

Figure 4 illustrates another use of the plane grating beamsplitter in an optical readout system wherein the input beam polarization is modified before it encounters the beamsplitter. In this mode, the beamsplitter is made to act more like a conventional beamsplitter by transmitting and diffracting any ratio of incident light as selected by the modifying means. In Figure 4, S polarized light source 51 generates S polarized light component 52 which passes through $\lambda/2$ retardation

plate 54. In a first selected orientation of plate 54, beam 52 will be transmitted, unmodified, through the plate, i.e. the S component will be completely transmitted. If the plate 54 is rotated by 45°, only the P component of beam 52 will be transmitted. For rotation angles between the initial position and the 45° rotation position, beam 52 will be elliptically polarized transmitting to the beamsplitter said P components of varying intensity. Thus, in the system shown, if plate 54 is oriented so that substantially all of the S component is transmitted, unmodified, therethrough, the beam, after conversion from linear to circular polarization by plate 58 and focusing by lens 59, can be used in a write mode to record information on the surface of disc 60, assuming the input levels from source 51 have been set high enough (A typical write source would be a gas laser such as argon or HeCd). If the system is to be operated in a read mode, plate 54 is rotated at some angle between 0 and 45° so that only some percentage of the S polarized light is transmitted therethrough. The diffracted beam in this case is at a lower power level than the write beam and can be used to read out information on disc 60 and reflect signals to detector 62 as described in the previous systems.

As shown in Figure 4, beamsplitter 56 is mounted on the surface of a light-transmitting member 64. This member, besides providing a support for the beamsplitter, also blocks reflection from the splitter input surface from being directed at the detector 62. Alternatively, an antireflection coating may be placed on the splitter surface. These expedients are equally applicable to the arrangements shown in Figures 2 and.

As seen in Figure 1, there are other values of λ/d which can be selected and profitably utilized for some systems. For example, λ/d values of 1.3—1.55 will provide diffraction efficiencies which will be acceptable for certain uses. It is obvious from Figure 1 that by adjusting the grating modulation, a beamsplitter for S polarized light can be made to have any ratio of transmitted to diffracted light with minimum energy loss in the beamsplitter grating.

## Claims

1. An optical reader apparatus for reading the information content of a recording surface (24), including a laser source (20) which generates an S polarized beam (22) of wavelength λ,
 a polarizing beamsplitter device (26),
 a wave retardation device 28) placed in the optical path so as to convert the linearly polarized diffracted beam into a circularly polarized beam, and
 a lens element (30) placed in the optical path between said retardation device (28) and the recording surface (24) so as to focus said beam onto the appropriate surface area of the recording surface,
 whereby said beam is reflected from said recording surface (24) through said lens (30) and through said retardation device (28), thereby being converted into a P polarized wave which is essentially completely transmitted through said beamsplitter (26) a detector device (32),

 characterised in that said beamsplitter (26) is formed as a surface relief transmission grating having a grating period d equal to said wavelength λ divided by a value of between 1.2 and 1.5, said grating essentially completely diffracting incident S polarized light and transmitting P polarized light, said grating being placed in the optical path of said coherent radiation so that said radiation is incident at an angle $\theta_i$ and diffracted at a substantially equal angle $\theta_d$, where $\theta \approx \theta_d \approx 45°$.

2. The apparatus of claim 1 wherein

$$d = \frac{\lambda}{1.414}$$

3. The apparatus of claims 1 or 2 wherein said grating is formed on the surface of a light-transmitting member.

4. The apparatus of any one of claims 1 to 3 including means for increasing the power output of said laser source (20) so as to operate in a write mode as well as read mode and further including means for tracking said beamsplitter arrangement across said recording surface.

5. The apparatus of any one of claims 1 to 4 including a second plane linear grating (46) having the same period, said second grating, in conjunction with said lens (50) serving to compensate for the wavelength shift of said laser light (Fig. 3).

6. The apparatus of any one of claims 1 to 4 including a phase retardation plate (54) between the source of laser light and the grating.

7. The apparatus of any one of claims 1 to 6 wherein said grating (26) is formed as a sinusoidal surface relief grating.

## Revendications

1. Appareil de lecture optique pour la lecture du contenu en information d'une surface d'enregistrement (24) comprenant une source laser (20) qui produit un faisceau polarisé S (22) de longueur d'onde λ;

— un dispositif (26) de fractionnement de faisceau polarisant;
— un dispositif (28) retardateur d'onde placé dans le trajet optique de manière à transformer le faisceau diffracté, polarisé linéairement, en faisceau polarisé circulairement; et
— un élémente de lentille (30) placé dans le trajet optique entre le système retardateur (28) et la surface d'enregistrement (24) de manière à focaliser la faisceau sur l'aire appropriée de la surface d'enregistrement;
— d'où il résulte que le faisceau est réfléchi par la surface d'enregistrement (24) par l'intermédiaire de la lentille (30) et par l'intermédiaire du dispositif retardateur (28), ce qui provoque sa conversion en onde polarisée P qui essentiellement totalement transmise par le dispositif de fractionnement de faisceau (26) vers un dispositif détecteur (32),

caractérisé en ce que le dispositif de fractionnement de faisceau (26) est formé en réseau de transmission à relief de surface ayant une période de réseau d égale à la longueur d'onde λ divisée par une valeur comprise entre 1,2 et 1,5, ce réseau diffractant essentiellement de façon complète la lumière polarisée S incidente et transmettant la lumière polarisée P, le réseau étant placé dans le trajet optique du rayonnement cohérent de façon que ce rayonnement tombe suivant un angle $\theta_i$ et soit diffracté suivant un angle $\theta_d$ sensiblement égal, où $\theta \simeq \theta_d \simeq 45°$.

2. Appareil selon la revendication 1, où

$$d = \frac{\lambda}{1,414}.$$

3. Appareil selon la revendication 1 ou 2, où le réseau est formé sur la surface d'un élément transmettant la lumière.

4. Appareil selon l'une quelconque des revendications 1 à 3, comprenant un moyen pour augmenter la puissance de sortie de la source laser (20) de manière à fonctionner dans un mode d'écriture ainsi que dans un mode de lecture et comportant en outre un moyen pour poursuivre l'agencement du dispositif de fractionnement de faisceau à travers la surface d'enregistrement.

5. Appareil selon l'une quelconque des revendications 1 à 4, comprenant un second réseau linéaire plan (46) ayant la même période, ce second réseau, en conjonction avec la lentille (50) servant à compenser la dérive de longueur d'onde de la lumière laser (figure 3).

6. Appareil selon l'une quelconque des revendications 1 à 4, comprenant une plaque retardatrice de phase (54) entre la source de lumière laser et le réseau.

7. Appareil selon l'une quelconque des revendications 1 à 6, où le réseau (26) est formé en réseau à relief en surface sinusoïdal.

**Patentansprüche**

1. Optischer Schriftleser zum Ablesen eines auf einer Aufzeichnungsoberfläche 24 aufgezeichneten Informationsgehaltes, mit einer Laserquelle (20), die einen S polarisierten Lichtstrahl (22) der Wellenlänge λ erzeugt, mit einer Polarisatorstrahlteilervorrichtung (26), mit einer Wellenverzögerungsvorrichtung (28), die so in dem optischen Weg angeordnet ist, daß sie den linearpolarisierten, gebeugten Strahl in einen zirkularpolarisierten Strahl umwandelt und mit einem Linsenelement (30), welches auf dem optischen Weg zwischen der Strahlverzögerungseinrichtung (28) und der Aufzeichnungsoberfläche (24) angeordnet ist, um den Strahl auf einen geeigneten Oberflächenbereich der Aufzeichnungsoberfläche zu fokussieren, wobei der Strahl von der Aufzeichnungsoberfläche (24) durch die Linse (30) und durch die Verzögerungseinrichtung (28) hindurch reflektiert wird und dabei in eine P polarisierte Welle umgewandelt wird, die im wesentlichen vollständig durch den Strahlteiler (26) hindurch auf eine Detektoreinrichtung (32) tritt, dadurch gekennzeichnet, daß der Strahlteiler (26) als Reliefgitterdurchlaßoberfläche ausgebildet ist, mit einem Gitterabstand d, der der Wellenlänge λ dividiert durch einen Wert zwischen 1,2 und 1,5 entspricht, wobei das Gitter einfallendes S polarisiertes Licht im wesentlichen vollständig beugt und P polarisiertes Licht durchläßt, und wobei das Gitter im optischen Weg der kohärenten Strahlung derart angeordnet ist, daß die Strahlung mit einem Einfallswinkel $\theta_i$ einfällt und um einen im wesentlichen gleichen Winkel $\theta_d$ gebeugt wird wobei $\theta \simeq \theta_d \simeq 45°$ ist.

2. Vorrichtung nach Anspruch 1, dadurch gekennzeichnet, daß

$$d = \frac{\lambda}{1.414}$$

ist.

3. Vorrichtung nach Anspruch 1 oder 2, dadurch gekennzeichnet, daß das Gitter auf der Oberfläche eines lichtdurchlässigen Elementes ausgebildet ist.

4. Gerät nach irgendeinem der Ansprüche 1—3, dadurch gekennzeichnet, daß Mittel zur Steigerung der Ausgangsleistung der Laserquelle (20) vorgesehen sind, um sowohl in der Betriebsart Schreiben als auch in der Betriebsart Lesen betrieben zu werden und daß weiterhin Mittel vorgesehen sind, um die Strahlteilervorrichtung über die Aufzeichnungsoberfläche zu führen.

5. Vorrichtung nach irgendeinem der Ansprüche 1 bis 4, dadurch gekennzeichnet, daß ein zweites ebenes lineares Gitter (46) vorgesehen ist, welches denselben Gitterabstand hat, wobei dieses zweite Gitter in Verbindung mit der Linse (50) dazu dient, um die Wellenlängenverschiebung des Laserlichts auszugleichen.

6. Gerät nach irgendeinem der Ansprüche 1 bis 4, dadurch gekennzeichnet, daß zwischen der Laserlichtquelle und dem Gitter eine Phasenverschiebungsplatte (54) angeordnet ist.

7. Vorrichtung nach irgendeinem der Ansprüche 1 bis 6, dadurch gekennzeichnet, daß das Gitter als Gitter mit sinusförmig verlaufender Oberfläche ausgebildet ist.

FIG. 1

FIG.2

FIG.3

FIG. 4